# EUROPEAN PATENT APPLICATION

(11) **EP 1 593 704 A2**
(43) Date of publication of application: **09.11.2005**
(21) Application number: 05005896.5
(22) Date of filing: 17.03.2005
(51) Int. Cl.: C08G 83/00

(54) **Precursor solution for organic polymer film formation and method for forming organic polymer film**

(30) Priority: 31.03.2004 JP 2004106879
(71) Applicant: MATSUSHITA ELECTRIC INDUSTRIAL CO., LTD., Kadoma-shi, Osaka 571-8501 (JP)
(72) Inventor: Aoi, Nobuo, Nishinomiya-shi Hyogo 662-0812 (JP)
(74) Representative: Grünecker, Kinkeldey, Stockmair & Schwanhäusser Anwaltssozietät

(57) **Abstract**

A precursor solution for use in forming an organic polymer film includes a first monomer which is a Lewis acid, a second monomer which is a Lewis base to be brought into a Lewis acid-base reaction, and a sacrificial organic molecule including a polar group.

## Description

### CROSS-REFERENCE TO RELATED APPLICATION

The disclosure of Japanese Patent Application No. 2004-106879 filed on March 31, 2004 including specification, drawings and claims are incorporated herein by reference in its entity.

### BACKGROUND OF THE INVENTION

### Field of the Invention

The present invention relates to an organic polymer film and a method for forming the organic polymer film, and more particularly relates to an interlayer insulation film having a low relative dielectric constant and a high mechanical strength and a method for forming the interlayer insulation film.

### Description of the Prior Art

Conventionally, as an interlayer insulation film for a very large scale integrated (VLSI) circuit and the like, an organic polymer film of a polymer formed by polymerization of aromatic molecules for the purpose of improving heat resistance has been used. Specifically, a polyimide derivative, a polyallylether derivative, a polyquinoline derivative, a polyparaxylene derivative and the like are known. Each of these polymers contains carbon as a main component and therefore the polarizability of a constituent element is lower than that in a SiO₂ base interlayer insulation film. For this reason, such a polymer as an interlayer insulation film with a low dielectric constant has drawn attentions.

Specifically, the relative dielectric constant of an organic polymer containing carbon as a main component is, for example, about 2.4-3.0, which is relatively low, compared to the relative dielectric constant of a SiO₂ base interlayer insulation film, i.e., about 3.3-4.5. As for SiO₂ base materials, an organic SOG (spin on glass) film into which an organic element has been introduced and has a relative dielectric constant of about 2.9 has been known as an interlayer insulation film.

To further reduce the relative dielectric constant of such a known organic polymer film, it has been under examination to make an organic polymer film have a porous structure. Then, as one actual method, an organic polymer film having a porous structure is formed by reducing a cross-link density. However, when this method is used, the mechanical strength and adhesion of an organic polymer film becomes larger as a cross-link density is increased. Accordingly, the mechanical strength and adhesion are reduced with reduction in the cross-link density. Moreover, if the cross-link density is reduced, a glass transition temperature is reduced, thus causing softening of an interlevel insulation film in heat treatment performed after formation of an organic polymer film as an interlevel insulation film. As a result, deformation and destruction of a multilayer interconnect structure are easily caused.

In contrast, a method in which to achieve a low dielectric constant of an organic polymer without causing reduction in the adhesion and mechanical strength of the organic polymer, molecules having a structure including vacancies therein are synthesized and polymerized, thereby forming a polymer structure with vacancies has been known.

Moreover, it has been proposed to utilize a low dielectric constant organic polymer having a three-dimensional polymer structure including three-dimensional vacancies (for example, see Japanese Laid-Open Publication No. 2001-332543).

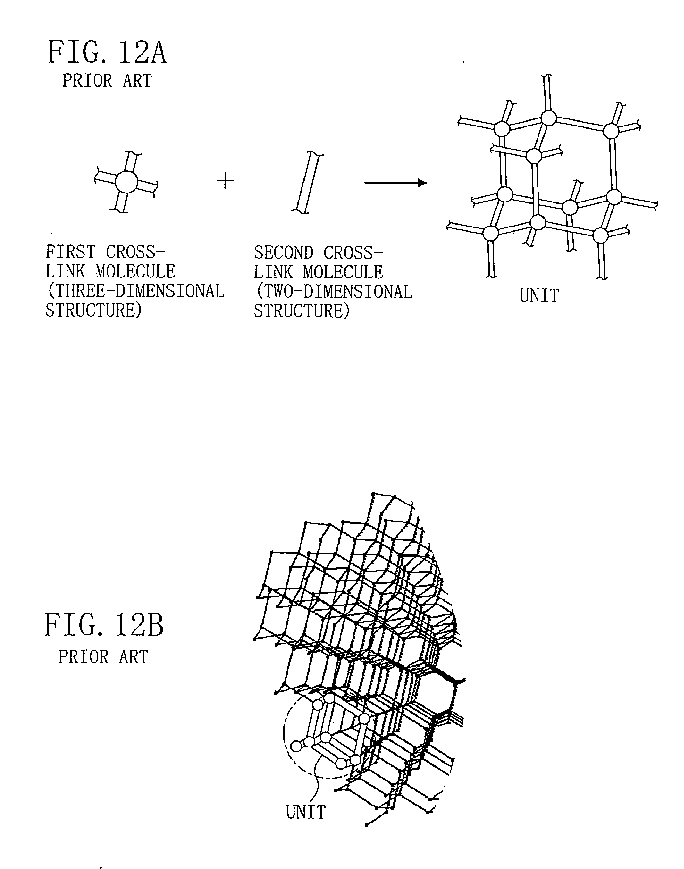

As such an organic polymer, for example, there is a polymer structure including units obtained in the manner shown in FIG. **12A**. Specifically, a first cross-link molecule including four functional group assemblies and having a three-dimensional structure is copolymerized with a second cross-link molecule including two functional group assemblies each of which is capable of binding to one of the four functional group assemblies and having a straight-chain (two-dimensional) structure, whereby a polymer structure having a diamond structure and including three-dimensional and molecule-sized vacancies is formed. This polymer structure is illustrated in FIG. **12B**. In FIG. **12B**, a unit of FIG. **12A** is surrounded by alternate long and short lines.

Hereinafter, an organic polymer having the above-described structure will be further described using a specific example.

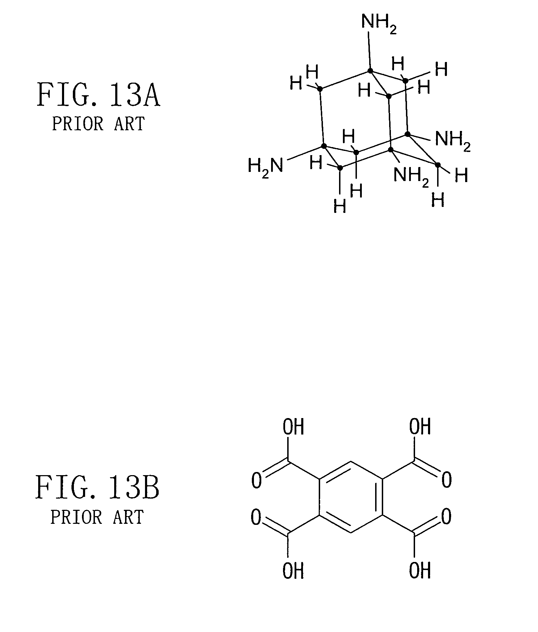

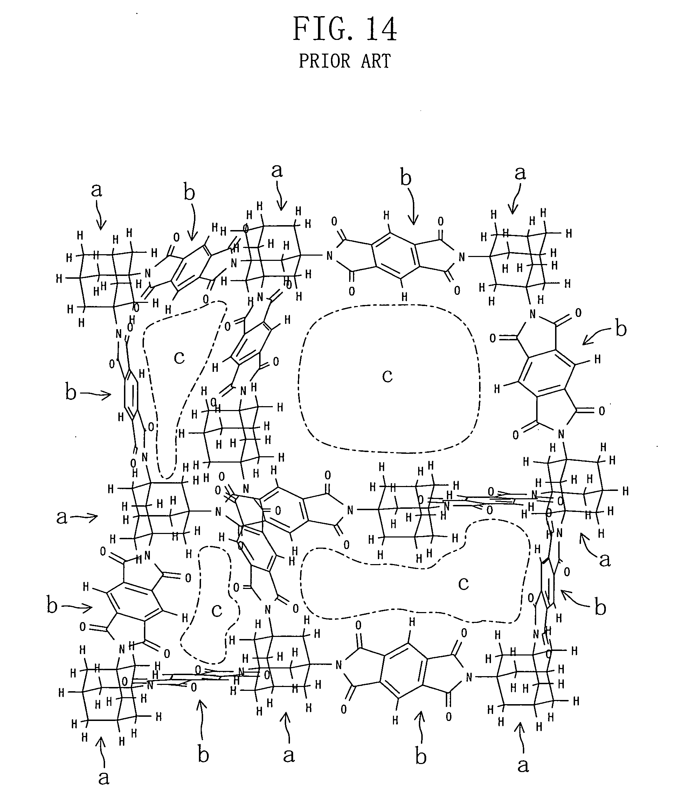

As a three-dimensional cross-link molecule, a tetraaminoadamantane derivative of FIG. **13A** including four amino groups is used. Moreover, as a second cross-link molecule, a benzenetetracarboxylic acid derivative of FIG. **13B** including a carboxyl group is used. When these substances are applied over a substrate and then heat treatment is performed thereto, for example, ten tetraaminoadmantane derivatives and 12 benzenetetracarboxylic acid derivatives are copolymerized with one another to form a polymer film having a diamond structure (i.e., a cage shape structure) of FIG. **14**. Herein, in FIG. **14**, a denotes tetraaminoadamantane derivative part, **b** denotes benzenetetracarboxylic acid derivative part, and **c** denotes a cavity.

In this case, a plurality of molecule level cavities **c** are formed in the polymer film. Since the cavities **c** have a size at a molecule level and are uniformly dispersed in the reticulate polymer film, the relative dielectric constant of the polymer film is very small.

However, an organic polymer film formed in the above-described manner and having a high cross-link density has a high level three-dimensional network and thus tends to be gelatinized. Herein, a gel means to be an insolubilized wet solid resulting from incorporation of a large quantity of solvent into network as polymerization proceeds and also cross-links are generated.

It is very difficult to form a molded body from a gel and to prepare a base material suitable to thin film formation from a gel. Also, it is not possible to apply a gel to a substrate. With these problems of gelation, it has been difficult to form an organic polymer film including cavities having a size at a molecule level therein and having a high cross-link density.

As a technique for solving the above-described problems of gelation, the present inventor found a method for forming a three-dimensional polymer structure by making a Lewis acid and a Lewis base self-organize through acid-base interaction (See Japanese Patent Application No. 2003-099904). For example, a benzenetetracarboxylic acid derivative monomer and a tetraaminoadamantane derivative monomer are used as a Lewis acid and a Lewis base, respectively, and the benzenetetracarboxylic acid derivative monomer and the tetraaminoadamantane derivative monomer are brought into a Lewis acid-base reaction in a solution. Thus, the Lewis acid and the Lewis base are bound to each other by electrostatic interaction, so that an adduct is formed. When a solvent is volatilized from the solution including the adduct, a supermolecular structure, i.e., a three-dimensional structure can be obtained. The supermolecular structure is illustrated in FIGS. **12A** and **12B**. Monomers are bound to one another by electrostatic interaction.

### SUMMARY OF THE INVENTION

However, in the above-described method for forming a cavity in a molecule through self-organization, the following problems arise.

As a problem, in the above-described method for forming a cavity in a molecule through self-organization, required conditions for synthesis are strict and a highly controlled reaction atmosphere is needed.

Furthermore, as another problem, even in a highly controlled reaction atmosphere, vibration due to heat causes disorder in a polymer structure and thus self-organization tends to be inhibited in many cases. Specifically, a supermolecular structure formed through hydrogen bonding based on a Lewis acid-base reaction in a solution is easily destroyed by vibration due to heat or the like. Therefore, there might be cases where as a result of destruction of a supermolecular structure because of heating in polymerization, only an organic polymer film of which most part has a random structure can be obtained. When self-organization is inhibited in such a manner, increase in a relative dielectric constant, reduction in a mechanical strength and like influences occur.

In view of the above-described problems, it is an object of the present invention to provide a precursor solution for an organic polymer film and a method for forming an organic polymer film in order to form an organic polymer film having a diamond structure and thus including a plurality of molecule-sized small cavities which is uniform in size and distribution and having a high cross-link density.

To achieve the above-described object, the precursor solution for use in forming an organic polymer film according to the present invention includes a first monomer which is a Lewis acid, a second monomer which is a Lewis base to be brought into a Lewis acid-base reaction with the first monomer, and a sacrificial organic molecule including a polar group.

With use of the precursor solution, the first monomer and second monomer are smoothly bound to each other through the Lewis acid-base reaction with the sacrificial organic molecule serving as a template, so that a supermolecular structure can be formed. Therefore, the first and second monomers can be copolymerized and used in forming an organic polymer film including uniform and molecule-sized cavities. Sacrificial organic molecules functioning as templates are decomposed by heat treatment, plasma processing or the like, and then volatilized to obtain cavities.

Lewis acid and base and Lewis acid-base reaction will be described.

Lewis acid and base are defined by Lewis. According to the Lewis theory, a base is a substance that can donate a pair of electrons to another atom to form a chemical bond (an electron pair donor) and an acid is a substance that can accept a pair of electrons from another atom to form a chemical bond (an electron pair acceptor). Moreover, a Lewis acid-base reaction is a reaction between a Lewis acid and a Lewis base and is understood as donating and accepting a pair of electrons and reorganization of an accompanied bonding. Thus, even a reaction with no hydrogen ions involved therein is explained as an acid-base reaction if donation and acceptance of a pair of electrons take place with the reaction. For example, formation of a coordinate bond is an example of such reactions.

Moreover, sacrificial organic molecules serve as a stabilizer in a supermolecular structure when being contained in a supermolecular structure in process steps for forming a supermolecular structure and are decomposed and removed to leave cavities in the supermolecular structure after the first and second monomers are copolymerized.

Moreover, the first monomer is a Lewis acid and the second monomer is a Lewis base, and therefore each of the first and second monomers has a polarizability. Accordingly, strong interaction exists among the first monomer, the second monomer and the sacrificial organic molecule including a polar group, so that and the first monomer, the second monomer and the sacrificial organic molecule have high compatibility. Therefore, aggregation of sacrificial organic molecules can be prevented and the sacrificial organic molecules exist as uniform and small particles in the precursor solution. Thus, the sacrificial organic molecules can be used as templates and thereby uniform and small cavities can be formed.

This will be hereinafter described.

In a known porous organic polymer film, monomers are nonpolar organic molecules. Therefore, in the known porous organic polymer film, polar-group-containing sacrificial organic molecules and monomers have poor compatibility. As a condition for making organic molecules serve as sacrificial organic molecules, the organic molecules have to be thermally decomposed at a relatively low temperature (about 400 °C or less). An organic molecule having such a property has a polar group in general.

When monomers and sacrificial organic molecules have poor compatibility in the above-described manner, in a solution, aggregation of the sacrificial organic molecules and aggregation of the monomers are accelerated. If the sacrificial organic molecules are aggregated, dispersion properties of the sacrificial organic molecules are reduced. This causes increase in the diameter of cavities when the sacrificial organic molecules are used as templates to form cavities. Therefore, aggregation of the sacrificial organic molecules is a large problem in formation of a porous polymer film.

However, in the precursor solution for use in forming an organic polymer film according to the present invention, each of the first monomer which is a Lewis acid, and the second monomer which is a Lewis base has a polarizability. Therefore, strong interaction exists among the first monomer, the second monomer and the sacrificial organic molecules and compatibility is high. As a result, the sacrificial organic molecules are not aggregated.

Thus, the precursor solution for use in forming an organic polymer film can be used for achieving an organic polymer film including small cavities of which the size and distribution are uniform. Moreover, with a supermolecular structure formed in the precursor solution maintained, copolymerization is performed. Therefore, an organic polymer film having a high cross-link density is obtained.

It is preferable that one of the first monomer and the second monomer is a three-dimensional cross-link molecule and the other is a two-dimensional cross-link molecule.

Herein, the three-dimensional cross-link molecule is a molecule including three or more functional group assemblies and the two-dimensional cross-link molecule is a straight-chain molecule including two functional group assemblies.

Moreover, a functional group assembly means to be part of a molecule which includes one or more functional groups and is capable of binding to another molecule. The number of functional groups included in a functional group assembly does not matter. For example, because a carboxyl group (functional group) binds with two amino groups (functional groups) to form an imidazole molecule. In this case, one carboxyl group and two amino groups together form a binding region, and thus the carboxyl group forms a functional group assembly and the two amino groups form a functional group assembly.

In this manner, a supermolecular structure including a three-dimensional binding can be obtained and therefore an organic polymer film including uniform and small cavities and having a high mechanical strength can be formed.

Moreover, in the precursor solution of the present invention, the first monomer and the second monomer together form an adduct including the sacrificial organic molecule by a Lewis acid-base interaction.

Thus, in the precursor solution, the first and second monomers form an adduct including sacrificial organic molecules. When a solvent is volatilized from the precursor solution, a supermolecular structure including small cavities of which the size and distribution are uniform can be reliably formed. In this case, the first monomer which is a Lewis acid and the second monomer which is a Lewis base are brought into a Lewis acid-base reaction, so that an adduct is formed by electrostatic interaction.

Moreover, it is preferable that the adduct has a diamond structure and includes the sacrificial organic molecule in a cavity in the diamond structure.

The diamond structure is a three-dimensional cross-link structure having a high cross-link density and also includes a plurality of molecule-sized small cavities of which the size and distribution are uniform. Thus, with use of the precursor solution in which the adduct having the diamond solution is formed, an organic polymer film with a high mechanical strength and a low dielectric constant can be reliably achieved.

Furthermore, the sacrificial organic molecule is included in a cavity portion of the adduct. Thus, by volatilizing a solvent, a stable supermolecular structure using the sacrificial organic molecule as a template can be formed. Accordingly, an organic polymer film having a diamond structure, and thereby including uniform and small cavities and having a high cross-link density can be reliably achieved.

Moreover, it is preferable that the first monomer is one of a carboxylic acid derivative, an alcohol derivative, a ketone derivative, an aldehyde derivative or an acid anhydride derivative, and the second monomer is an amine derivative.

Thus, in the precursor solution, a Lewis acid-base reaction between the first monomer which is a Lewis acid and the second monomer which is a Lewis base can be reliably brought about. As a result, a precursor solution for use in forming an organic polymer film, which allows reliable formation of a supermolecular structure, can be reliably prepared.

Moreover, in the precursor solution for use in forming an organic polymer film according to the present invention, it is more preferable that the first monomer is an adamantane derivative including at least a carboxyl group, and the second monomer is an aromatic hydrocarbon derivative including at least an amino group.

Thus, in the precursor solution, a Lewis acid-base reaction can be reliably brought about with the carboxyl group of the first monomer which is a Lewis acid and the amino group of the second monomer which is a Lewis base. Therefore, a precursor solution for use in forming an organic polymer film, which allows reliable formation of a supermolecular structure, can be reliably prepared.

Moreover, when the precursor solution is used, with copolymerization of a carboxyl group and an amino group, a polyimidazole skeleton is formed. An N-H bond included in the imidazole skeleton is a polar group. Therefore, the adhesiveness of a film can be increased.

Moreover, in the precursor solution for use in forming an organic polymer film according to the present invention, it is more preferable that the first monomer is an adamantane derivative including at least a carboxyl group, and the second monomer is an aromatic hydrocarbon derivative including at least an amino group and at least a hydrocarbon base.

Thus, in the precursor solution, a Lewis acid-base reaction can be reliably brought about with the carboxyl group of the first monomer which is a Lewis acid and the amino group and the hydroxyl group of the second monomer which is a Lewis base. Therefore, a precursor solution for use in forming an organic polymer film, which allows reliable formation of a supermolecular structure, can be reliably prepared.

Moreover, when the precursor solution is used, with copolymerization among the carboxyl group, the amino group, and the hydroxyl group, a polyoxazole skeleton is formed. Therefore, a film with a low polarizability, a low hygroscopicity and a low relative dielectric constant can be obtained.

Moreover, it is preferable that the first monomer is an aromatic hydrocarbon derivative including at least a carboxyl group, and the second monomer is an adamantane derivative including at least an amino group.

Thus, in the precursor solution, a Lewis acid-base reaction can be reliably brought about with the carboxyl group of the first monomer which is a Lewis acid and the amino group of the second monomer which is a Lewis base. Therefore, a precursor solution for use in forming an organic polymer film, which allows reliable formation of a supermolecular structure, can be reliably prepared.

Moreover, when the precursor solution is used, with copolymerization of the carboxyl group and the amino group, a polyimide skeleton is formed. In this case, because polymerization is easily caused, an oligomer including a sacrificial organic molecule can be quantitatively formed in a short time.

Moreover, in the precursor solution for use in forming an organic polymer film, it is preferable that the sacrificial organic molecule is a cyclodextrin derivative or a dendrimer derivative.

Thus, a cyclodextrin derivative or a dendrimer derivative can be used as a sacrificial organic molecule having substantially the same size as that of a cavity portion of a diamond structure. Therefore, a supermolecular structure using a sacrificial organic molecule as a template can be more reliably formed.

Moreover, it is preferable that the precursor solution for use in forming an organic polymer film further includes: an oligomer of the first monomer and the second monomer including the sacrificial organic molecule.

Thus, the oligomer including a sacrificial organic molecule is formed. Accordingly, when polymerization is performed using the precursor solution, an organic polymer film including uniform and small cavities and having a high cross-link density can be more reliably achieved.

A first method for forming an organic polymer film devised for solving the above-described problems according to the present invention includes the steps of: applying any one of the precursor solutions for use in forming an organic polymer film according to the present invention over a substrate; copolymerizing the first monomer and the second monomer in the precursor solution applied over the substrate to obtain a copolymer; and removing the sacrificial organic molecule from the copolymer to form an organic polymer film.

Thus, by volatilizing a solvent from a precursor solution applied to a substrate, a first monomer and a second monomer can form a supermolecular structure using a sacrificial organic molecule as a template. Thereafter, when the first monomer and the second monomer are copolymerized, a polymer having a three-dimensional structure can be obtained. Subsequently, when the sacrificial organic molecule included as a template in the supermolecular structure is removed, an organic polymer film including a plurality of molecule-sized small cavities of which the size and distribution are uniform and having a high cross-link density can be formed. In this case, volatilization of a solvent from the precursor solution and removal of the sacrificial organic molecule included as a template are performed by heat treatment, plasma processing and the like.

In this case, each of the first and second monomers includes a polar group and therefore strong interaction with the sacrificial organic molecule including a polar group occurs. As a result, the first and second monomers and the sacrificial organic molecule have high compatibility. Thus, aggregation of sacrificial organic molecules can be prevented, so that the sacrificial organic molecules exist as uniform and small particles in the precursor solution. Such sacrificial organic molecules can be used as templates, and therefore, small cavities of which the size and distribution are uniform can be formed.

It is preferable that in the step of obtaining the copolymer and the step of forming the organic polymer film, heat treatment is performed. In the step of obtaining the copolymer and the step of forming the organic polymer film, it is also preferable to perform plasma processing.

Thus, volatilization of a solvent from the precursor solution and removal of the sacrificial organic molecule included as a template in the supermolecular structure can be reliably preformed, so that the organic polymer film of the present invention can be reliably formed.

A second method for forming an organic polymer film according to the present invention includes the steps of: performing heat treatment to any one of the precursor solutions for use in forming an organic polymer film according to the present invention (except for a precursor solution including an oligomer of the first and second monomers, formed from part of the whole amount of the first monomer and part of the whole amount of the second monomer and including the sacrificial organic molecule) so as to form an oligomer of the first monomer and the second monomer including the sacrificial organic molecule from part of the whole amount of the first monomer and part of the whole amount of the second monomer; applying the precursor solution including the oligomer over a substrate; copolymerizing the first monomer, the second monomer and the oligomer in the precursor solution including the oligomer and applied to the substrate so as to obtain a copolymer; and removing the sacrificial organic molecule from the copolymer so as to form an organic polymer film.

Thus, in addition to the same effects as those of the first method for forming an organic polymer film, a supermolecular structure can be reliably formed by forming an oligomer of the first and second monomers including a sacrificial organic molecule in a precursor solution. As a result, an organic polymer film including uniform and small cavities and having a high cross-link density and a low dielectric constant can be reliably formed.

It is preferable that in the step of obtaining the copolymer and the step of forming the organic polymer film, heat treatment is performed. In the step of obtaining the copolymer and the step of forming the organic polymer film, it is also preferable to perform plasma processing.

Thus, volatilization of a solvent from the precursor solution and removal of the sacrificial organic molecule included as a template in the supermolecular structure can be reliably preformed, so that the organic polymer film of the present invention can be reliably formed.

As has been described, according to a precursor solution for use in forming an organic polymer film and a method for forming an organic polymer film according to the present invention, an organic polymer film including uniform and small cavities and having a high cross-link density and a low dielectric constant can be formed. For example, an organic polymer film having a diamond structure and the like can be formed. An organic polymer film formed in the above-described manner has a low dielectric constant, a high mechanical strength and a high adhesiveness. Therefore, the organic polymer film is useful as an interlayer insulation film or the like.

### BRIEF DESCRIPTION OF THE DRAWINGS

FIGS. **1A** through **1D** are illustrations of a precursor solution according to an embodiment of the present invention and a supermolecular structure formed by using the precursor solution: FIGS. **1A** and **1B** are conceptual illustrations of binding between a Lewis acid and a Lewis base through electrostatic interaction; FIG. **1C** is a schematic illustration of a unit in an adduct of a Lewis acid and a Lewis base including a sacrificial organic molecule; and FIG. **1D** is an illustrating of a supermolecular structure including the unit of FIG. **1C.**
FIGS. **2A** and **2B** are illustrations of an organic polymer formed by using the precursor solution of the embodiment of the present invention: FIG. **2A** is a schematic illustration of a polymer unit formed by polarization of a first monomer which is a Lewis acid and a second monomer which is a Lewis base; and FIG. **2B** is a schematic illustration of a polymer structure including the unit of FIG. **2A**.
FIGS. **3A** through **3D** are chemical formulas of specific examples for the first monomer which is a Lewis acid included in the precursor solution of the embodiment of the present invention.
FIGS. **4A** through **4D** are chemical formulas of specific examples for the second monomer which is a Lewis base included in the precursor solution of the embodiment of the present invention.
FIGS. **5A** through **5D** are chemical formulas of specific examples for the second monomer which is a Lewis base included in the precursor solution of the embodiment of the present invention.
FIGS. **6A** through **6D** are chemical formulas of specific examples for the first monomer which is a Lewis acid included in the precursor solution of the embodiment of the present invention.
FIGS. **7A** through **7D** are chemical formulas of specific examples for the first monomer which is a Lewis acid included in the precursor solution of the embodiment of the present invention.
FIGS. **8A** through **8D** are chemical formulas of specific examples for the second monomer which is a Lewis base included in the precursor solution of the embodiment of the present invention.
FIGS. **9A** and **9B** are illustrations of examples for a sacrificial organic molecule included in the precursor solution of the embodiment of the present invention: FIG. **1A** is an exemplary chemical formula for β-cyclodextrin; and FIG. **1B** is an exemplary chemical formula for polyamidoamine dendrimer.
FIGS. **10A, 10B** and **10C** are reaction formulas illustrating the process of generating of a polymer included in a precursor solution of the embodiment of the present invention: FIG. **10A** is a reaction formula for a polyimidazole base polymer; FIG. **10B** is a polyoxazole base polymer; and FIG. **10C** is a reaction formula for a polyimide base polymer.
FIG. **11** is a schematic illustration of an adduct obtained by Example 1 of the present invention.
FIG. **12A** is an illustration showing how a polymer unit having a diamond structure can be obtained by copolymerizing a three-dimensional cross-link molecule and a two-dimensional cross-link molecule; and FIG. **12B** is an illustration of a polymer structure including the unit.
FIG. **13A** is an illustration of a tetraaminoadamantane derivative, i.e., a three-dimensional molecule; and FIG. **13B** is an illustration of a benzenetetracarboxylic acid derivative.
FIG. **14** is an illustration of a supermolecule, i.e., a known three-dimensional polymer structure.

### DESCRIPTION OF THE PREFERRED EMBODIMENTS

Hereinafter, a precursor solution for use in forming an organic polymer film according to an embodiment of the present invention will be described with reference to the accompanying drawings.

The precursor solution for use in forming an organic polymer film according to this embodiment includes a first monomer **A**, i.e., a Lewis acid, a second monomer **B**, i.e., a Lewis base, and a sacrificial organic molecule **C** including a polar group.

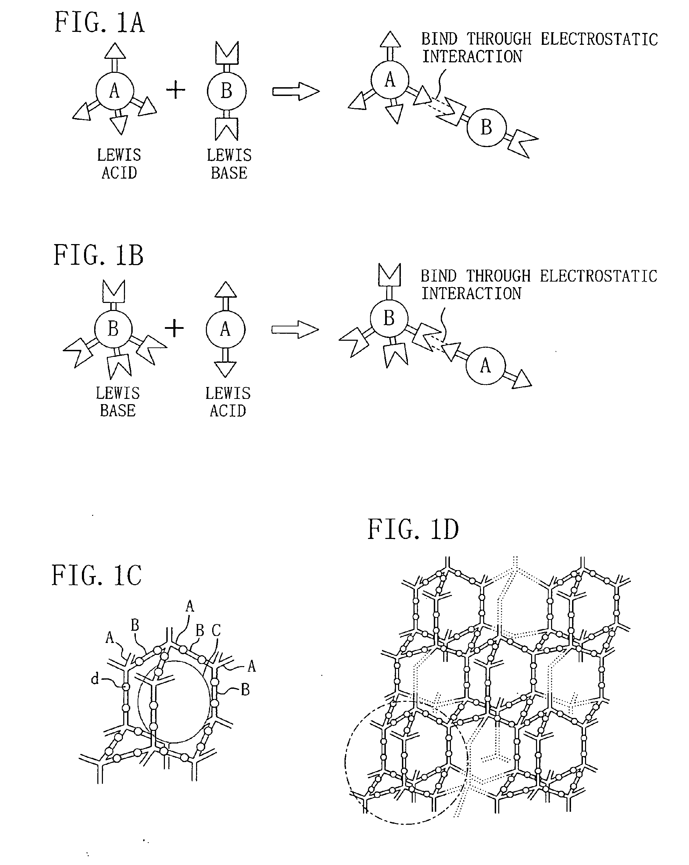

For example, assume that the first monomer **A** is a Lewis acid (three-dimensional cross-link molecule) including four functional group assemblies and the second monomer **B** is a Lewis base (a two-dimensional cross-link molecule) including two functional group assemblies. In this case, the first monomer **A** and the second monomer **B** are brought into a Lewis acid-base reaction in the manner shown in FIG. **1A** to form an adduct with bindings by electrostatic interaction.

As a result, the first and second monomers **A** and **B** forms a supermolecular structure including the sacrificial organic molecule **C** and a unit shown in FIG. **1C**. In this case, **A** denotes a first monomer, **B** denotes a second monomer, and **C** denotes a sacrificial organic molecule included in a cavity of a supermolecular structure. Moreover, **d** denotes a region in which the first monomer **A**, i.e., a Lewis acid, and the second monomer **B**, i.e., a Lewis base, are bound with each other through electrostatic interaction.

The supermolecular structure formed in the above-described manner has a diamond structure as shown in FIG. **1D.** In FIG. **1D,** illustration of a sacrificial organic molecule **C** is omitted and a region corresponding to a unit of FIG. **1C** is surrounded by alternate long and short lines.

The precursor solution of this embodiment includes the sacrificial organic molecule C including a polar group and strong interaction exists among the first monomer **A**, the second monomer **B** and the sacrificial organic molecule. This is because each of the first monomer **A**, i.e., a Lewis acid, and the second monomer **B** i.e., a Lewis base, has a polarizability. Thus, as shown in FIG. **1C**, the supermolecular structure includes the sacrificial organic molecule **C** in a cavity. Therefore, the supermolecular structure obtained from the precursor solution of this embodiment is more stable, compared to the case where the sacrificial organic molecule **C** is not included in the structure. Thus, the supermolecular structure can stably maintain its structure without being influenced by vibration due to heat and the like.

Moreover, each of the first and second monomers **A** and **B** includes a polar group and have high compatibility with the sacrificial organic molecule **C** including a polar group, so that the sacrificial organic molecule **C** is not aggregated at all. Accordingly, a supermolecular structure including a plurality of molecule-sized small cavities of which the size and distribution are uniform can be formed.

As has been described, the precursor solution for use in forming an organic polymer film according to this embodiment is useful for forming an organic polymer film including uniform and small cavities and having a high cross-link density.

Moreover, as another example, the case where the first monomer **A** is a Lewis acid including two functional group assemblies and the second monomer **B** is a Lewis base including four functional group assemblies will be described. In this case, the monomer **A** and the monomer **B** are brought into a Lewis acid-base reaction, as shown in FIG. **1B,** thereby forming an adduct with bindings through electrostatic interaction. In this example, the supermolecular structure shown in FIGS. **1C** and **1D** is formed. Assume that in this case, **A** of FIG. **1C** denotes the second monomer and **B** of FIG. **1C** denotes the first monomer.

Moreover, when other organic molecules than the above-described two monomers used as the first and second monomers are used, the organic molecules as the first and second monomers can form an adduct, so that a supermolecular structure can be obtained. For example, there is a case where the first monomer **A** is a mixture of a Lewis acid including four functional group assemblies and a Lewis acid including three functional group assemblies and the second monomer **B** is a Lewis base including two functional group assemblies.

Moreover, it is also preferable that the precursor solution is subjected to heat treatment to cause part of the whole amount of the first monomer and part of the whole amount of the second monomer to be polymerized, thereby forming oligomers from part of the whole amount of the adduct in the precursor solution. Thus, an oligomer including a sacrificial organic molecule is formed and formation of a supermolecular structure can be performed in a more simple manner. As a result, the precursor solution for use in forming an organic polymer film according to this embodiment allows reliable formation of an organic polymer film including uniform and small cavities and having a high cross-link density.

Next, a method for forming an organic polymer film according to this embodiment will be described with reference to the accompanying drawings.

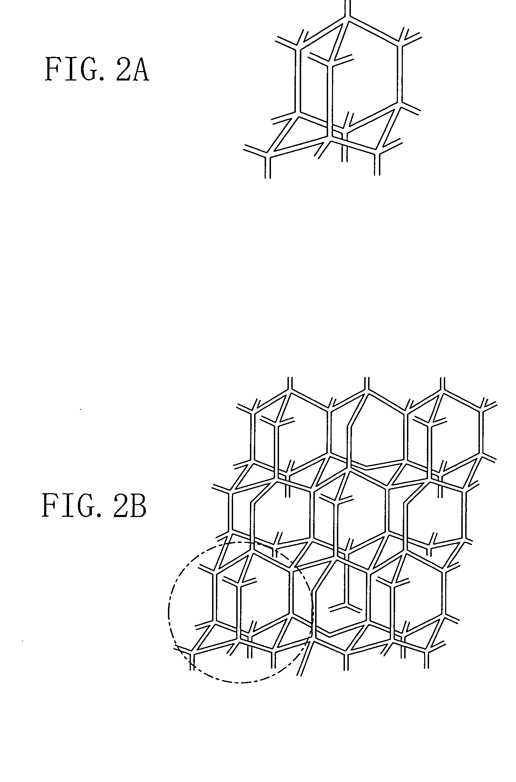

First, a precursor solution for use in forming an organic polymer film according to this embodiment is applied over a semiconductor device or a substrate on which an interconnect structure and the like are formed. Next, heat treatment is performed to the substrate to volatilize a solvent from the precursor solution, thereby forming a supermolecular structure. Thereinafter, when the substrate is further heated, polymerization of monomers constituting the supermolecular structure proceed and furthermore a sacrificial organic molecule is thermally decomposed and volatilized. Thus, for example, an organic polymer film including a unit of FIG. **2A** and having a diamond structure of FIG. **2B** is formed. In the organic polymer film, a cavity is formed in a region from which the sacrificial organic molecule has been removed. In FIG. **2B**, a unit of FIG. **2A** is surrounded by alternate long and short lines.

When an organic polymer film is formed in the above-described manner, in the organic polymer, a plurality of uniform and small size cavities are uniformly distributed. As a result, the relative dielectric constant is reliably reduced and, because of its high cross-link density, a high mechanical strength and a high density can be reliably achieved.

In this embodiment, the organic polymer film is formed by performing volatilization of a solvent from the precursor solution, decomposition of the sacrificial organic molecule and the like by heat treatment. However, the technique used for forming an organic polymer film is not limited to heat treatment but, for example, some other technique such as plasma processing and the like may be used.

Next, in this embodiment, a Lewis acid used as the first monomer and a Lewis base used as the second monomer will be described.

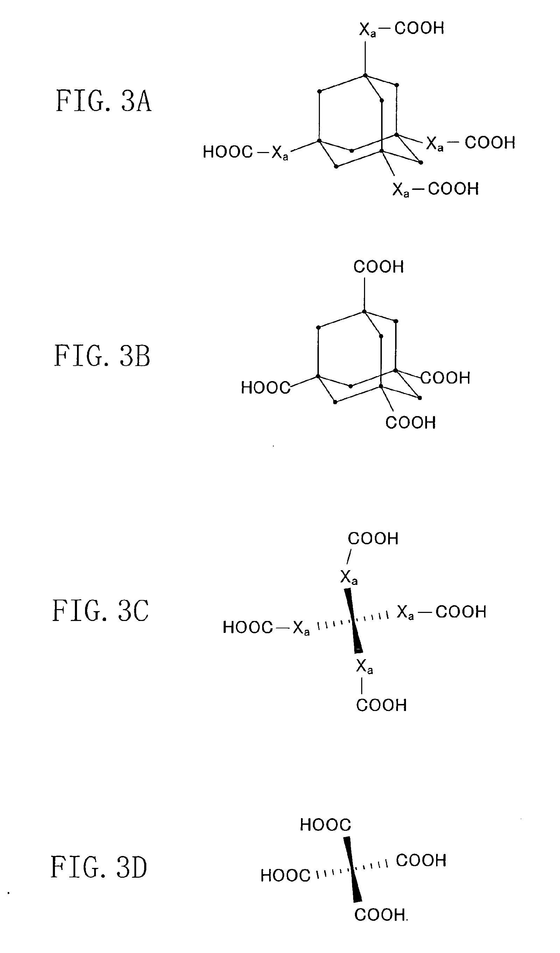

First, as the first monomer which is a Lewis acid, a carboxylic acid derivative, an alcohol derivative, a ketone derivative, an aldehyde derivative, an acid anhydride derivative or the like can be used. Examples for these derivatives are shown in FIGS. **3A** through **3D.** In FIGS. **3A, 3B** and **3C, X**_{**a**} denotes aromatic hydrocarbon, aliphatic hydrocarbon, an aromatic hydrocarbon derivative or an aliphatic hydrocarbon derivative.

Moreover, each of the examples of substances shown in FIGS. **3A** through **3D**, which can be used as the first monomer, includes a carboxyl group as a functional group assembly. However, instead of part or all of carboxyl groups, hydroxyl group(s), ketone group(s), aldehyde group(s), or the like may be used.

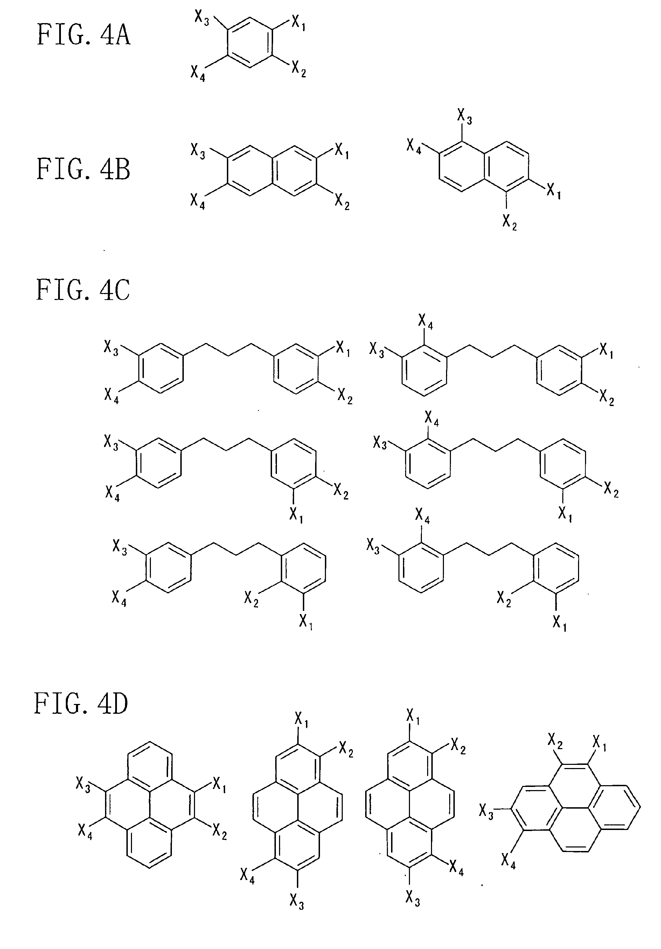

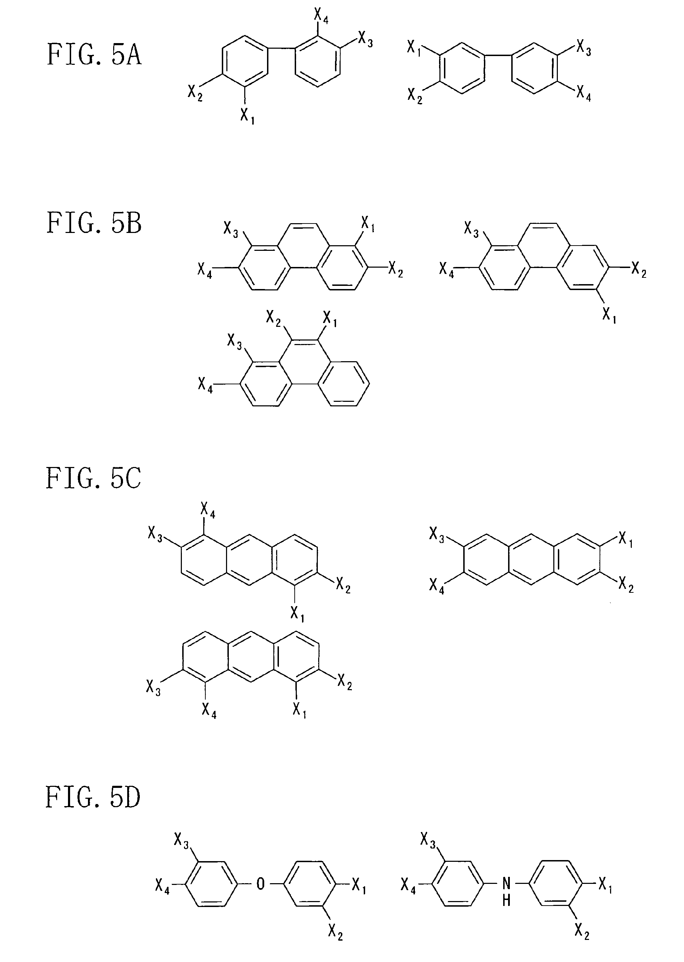

When the first monomer is a carboxylic acid derivative, an alcohol derivative, a ketone derivative, an aldehyde derivative, an acid anhydride derivative or the like, an amine derivative is preferable as a Lewis base. Examples for an amine derivativ will be shown in FIGS. **4A** through **4D** and FIGS. **5A** through **5D**. In FIGS. **4A** through **4D** and FIGS. **5A** through **5D**, at least one of **X**_{**1**} and **X**_{**2**} is an NH₂ group and others **X**_{**1**} and **X**_{**2**}, which are not an NH₂ group, are an OH group. In the same manner, at least one of **X**_{**3**} and **X**_{**4**} is an NH₂ group and others **X**_{**3**} and **X**_{**4**}, which are not an NH₂ group, are OH groups.

Moreover, as the first monomer of this embodiment, an admantane derivative including at least a carboxyl group may be used.

In this case, as the second monomer, use of an aromatic hydrocarbon derivative including at least an amino group, or an aromatic hydrocarbon derivative including at least an amino group and a hydroxyl group is specifically preferable.

As examples for an adamantane derivative including at least a carboxyl group, there are a 1-carboxyladamantane derivative, a 1, 3-dicarboxyladamantane derivative, a 1, 3, 5-tricarboxyladamantane derivative, a 1, 3, 5, 7-tetracarboxyladamantane derivative or the like. Furthermore, an adamantane derivative may be a mixture of one of these derivatives.

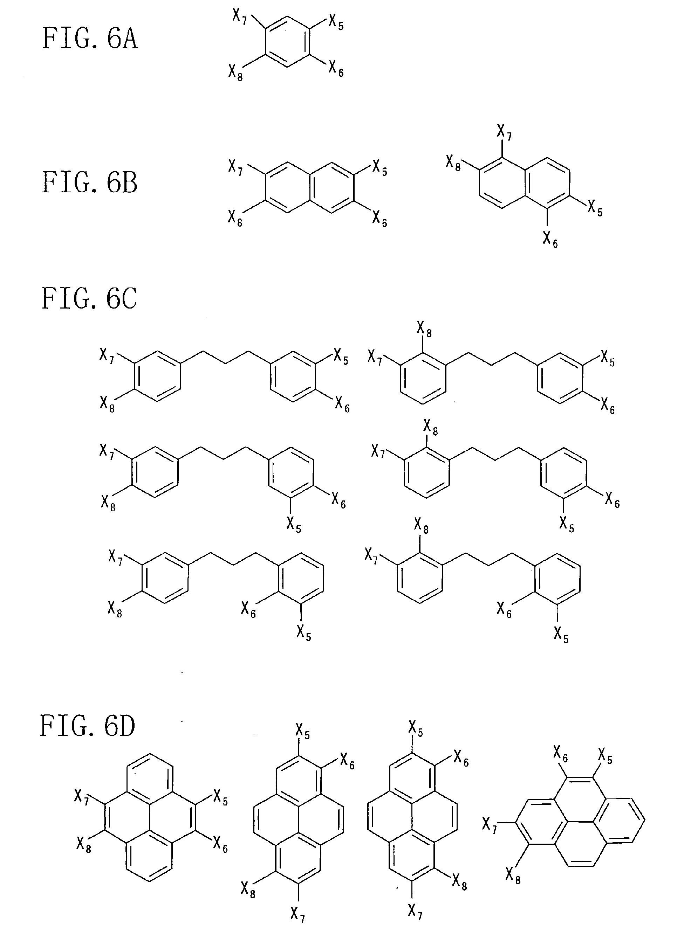

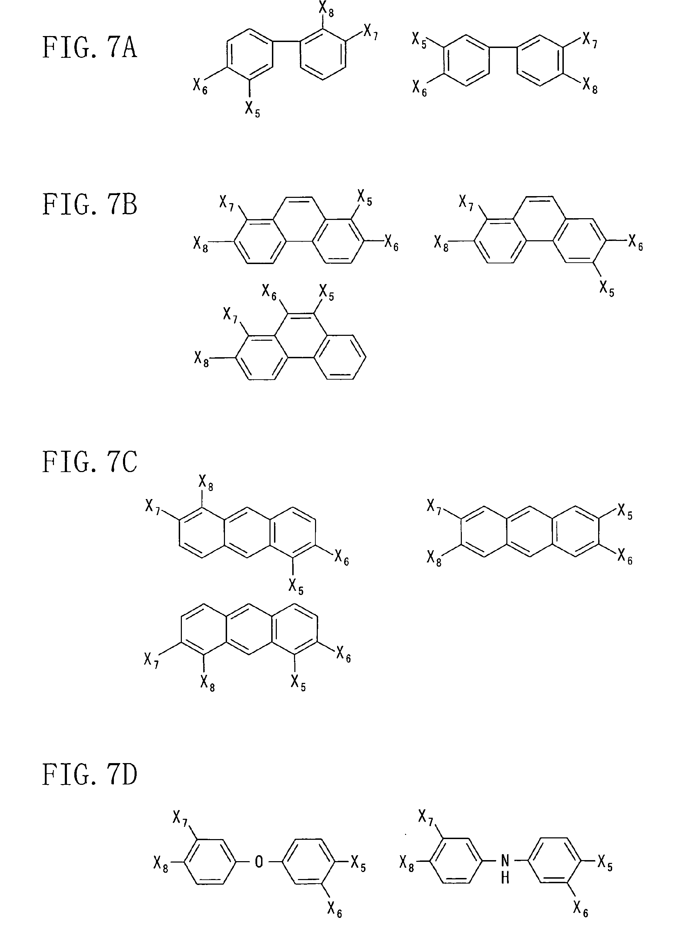

Moreover, as the first monomer in this embodiment, an aromatic hydrocarbon derivative including a carboxyl group can be used. As such an aromatic hydrocarbon derivative, a benzene derivative including a carboxyl group, a benzidine derivative including a carboxyl group, a naphtalene derivative including a carboxyl group, an anthracene derivative including a carboxyl group, or a tetracene derivative including a carboxyl group can be used. Specific examples for these derivatives are shown in FIGS. **6A** through **6D** and FIGS. **7A** through **7D.** In FIGS. **6A** through **6D** and FIGS. **7A** through **7D, X**_{**5**} and **X**_{**6**} together form a group shown in Chemical formula 1 or Chemical formula 2 and **X**_{**7**} and **X**_{**8**} together form a group show in Chemical formula 1 or Chemical formula 2.

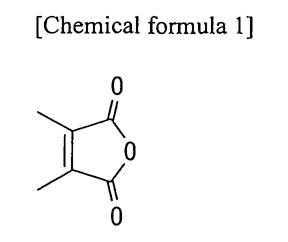

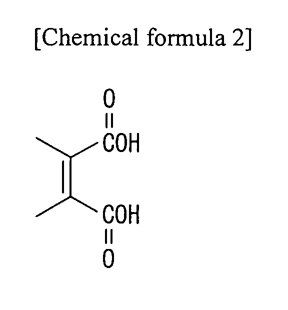

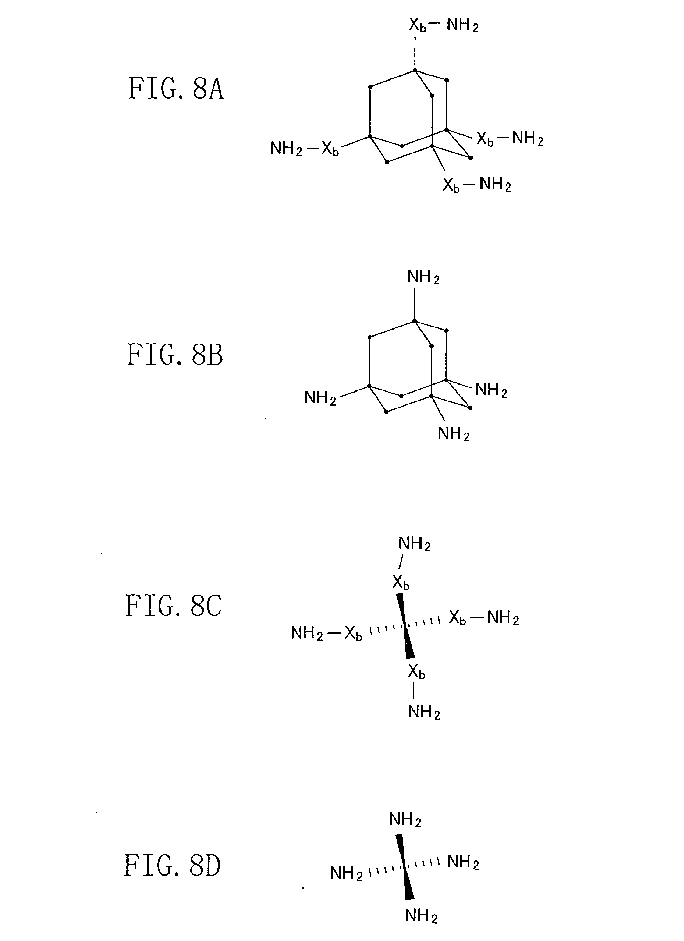

When the first monomer is an aromatic hydrocarbon derivative including a carboxyl group, an amine derivative including at least an amino group is preferable as the second monomer. Specific examples for such an amine derivative are shown in FIGS. **8A** through **8D.** In FIGS. **8A, 8B** and **8C, X**_{**b**} is a derivative of aromatic hydrocarbon, aliphatic hydrocarbon, or aromatic hydrocarbon.

Moreover, as the second monomer, an adamantane derivative including at least an amino group is more preferable. As examples of such an adamantane derivative, a 1-aminoadamantane derivative, a 1,3-diaminoadamantane derivative, a 1, 3, 5-triaminoadamantane derivative, or a 1, 3, 5, 7-tetraamine derivative can be used.

Specific examples for the first and second monomers have been described. However, a monomer used in this embodiment is not limited to the above-described substances.

The sacrificial organic molecule including a polar group and used for the precursor solution for use in forming an organic polymer film according to this embodiment is not specifically limited as long as the sacrificial organic molecule includes cavities with the substantially the same size as that of the cavities in the diamond structure formed in this embodiment and has a polar group.

For example, a cyclodextrin derivative including a hydroxyl group as a polar group or a dendrimer derivative including an amino group as a polar group can be used. These derivatives are preferably used when the first monomer is an adamantane derivative including carboxyl group and the second monomer is an aromatic hydrocarbon derivative including an amino group and a hydroxyl group. Moreover, the derivatives are preferably used when the first monomer is an aromatic hydrocarbon derivative and the second monomer is an admantane derivative including an amino group.

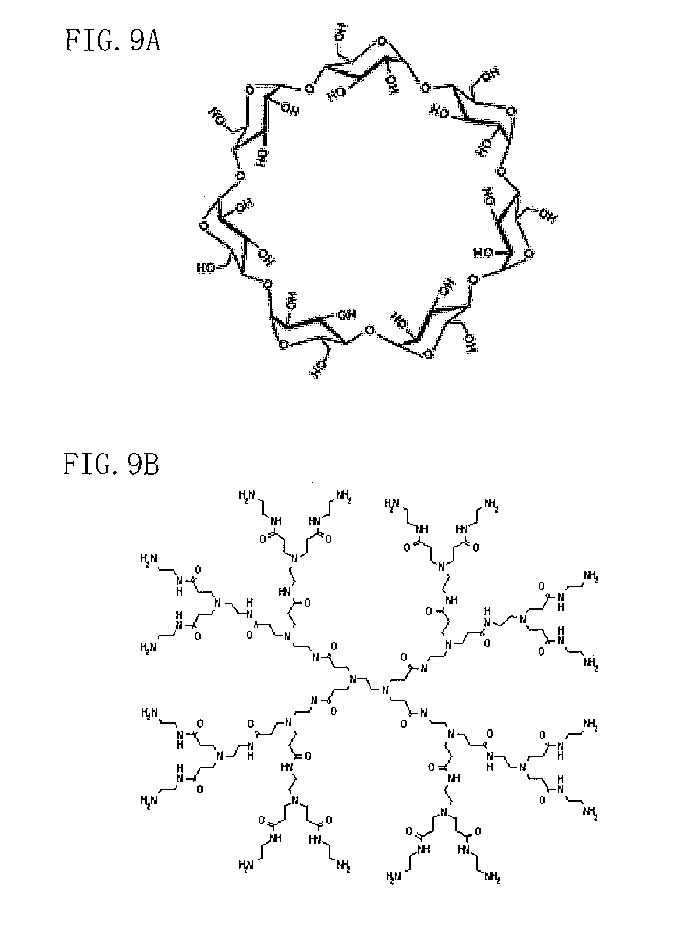

In this case, cyclodexytrin is a cyclic oligosaccharide including α-1,4 glucoside bond of glucose molecules. As examples for a cyclodextrin derivative, there are α-cyclodexitrin, β-cyclodexytrin and γ-cyclodexytrin. The number of glucoses molecules bound in a ring is six for α-cyclodexitrin, seven for β-cyclodexytrin, and eight for γ-cyclodexytrin. The β-cyclodexitrin as an example for a cyclodexytrin derivative is shown in FIG. **9A.**

Moreover, a dendrimer is a three-dimensional highly branched polymer having a structure including regularly branched portions as a tree. Polyamidoamine dendrimer is shown in FIG. **9B**.

A sacrificial organic molecule having a polarizability is not limited to cyclodexystrin and dendrimer but may be appropriately selected according to each of first and second monomers.

Next, a chemical reaction which takes place when an organic polymer film according to this embodiment is formed will be described with reference to the accompanying drawings.

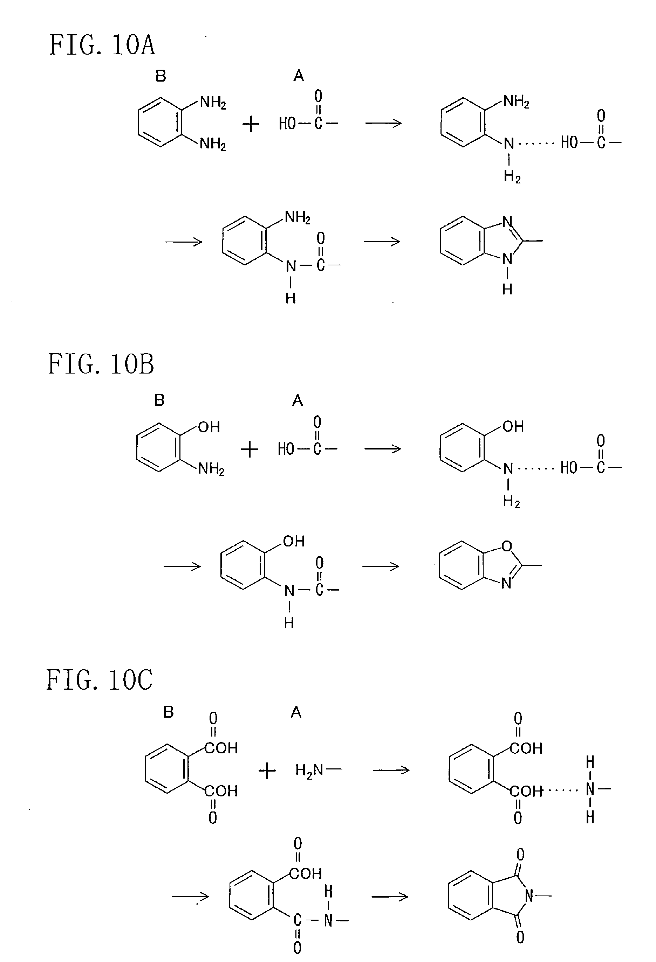

FIGS. **10A**, **10B** and **10C** are chemical formulas expressing chemical reactions which take place when chemical bonding between the first monomer **A** and the second monomer **B.** The chemical reactions will be hereinafter separately described.

FIG. **10A** is a chemical formula illustrating a chemical reaction which takes place when a polyimidazole base polymer is generated from the first monomer **A** including a carboxyl group and the second monomer **B** including two amino groups. In FIG. **10A,** as for the first monomer **A,** only a carboxyl group is shown and illustration other part of the first monomer **A** is omitted.

FIG. **10B** is a chemical formula illustrating a chemical reaction which takes place when a polyoxazole base polymer is generated from the first monomer **A** including a carboxyl group and the second monomer **B** including an amino group and a hydroxyl group. In FIG. **10B**, as for the first monomer **A,** only a carboxyl group is shown and illustration of other part of the first monomer **A** is omitted.

FIG. **10C** is a chemical formula illustrating a chemical reaction which takes place when a polyimide base polymer is generated from the first monomer **A** including an amino group and the second monomer **B** including two carboxyl groups. In FIG. **10B**, as for the first monomer A, only an amino group is shown and illustration other part of the first monomer A is omitted.

### (Example 1)

Hereinafter, Example 1 as a specific example of an embodiment of the present invention will be described with reference to the accompanying drawings.

In Example 1, as the first monomer which is a Lewis acid, 1, 3, 5, 7-tetracarboxyladamantane, i.e., adamantane including carboxyl groups as four functional group assemblies is used. 1, 3, 5, 7-tetracarboxyladamantane is a three-dimensional cross-link molecule expressed by the chemical formula of FIG. **3B**. Moreover, as the second monomer which is a Lewis base, tetraaminobenzene, i.e., benzene including amino groups as two functional group assemblies is used. Tetraaminobenzene is a two-dimensional molecule cross-link molecule expressed by the chemical formula of FIG. **4A** where each of **X1*****,*** **X2, X3** and **X4** is a NH₂ group. Moreover, as the sacrificial organic molecule including a polar group, α-cyclodextrin is used. α-cyclodextrin has the same structure as that of FIG. **9A** but includes six glucose molecules.

First, 1, 3, 5, 7-tetracarboxyladamantane of 0.019 mol (6 g), tetraaminobenzene of 0.038 mol (5.3 g) and α-cyclodextrin of 0.002 mol (2 g) are dissolved in 100 ml of cyclohexanone, thereby preparing a precursor solution. In this case, the mole ratio between 1, 3, 5, 7-tetracarboxyladamantane and tetraaminobenzene is set to be 2:1, so that an adduct having a similar structure to a diamond structure is formed in a mixture solution.

In this case, if the solution is prepared as being heated at 60 °C, dissolution properties of 1, 3, 5, 7-tetracarboxyladamantane, tetraaminobenzene and α-cyclodextrin are increased, so that the precursor can be prepared in a short time.

Thus, the precursor solution for use in forming an organic polymer film according to Example 1 can be obtained.

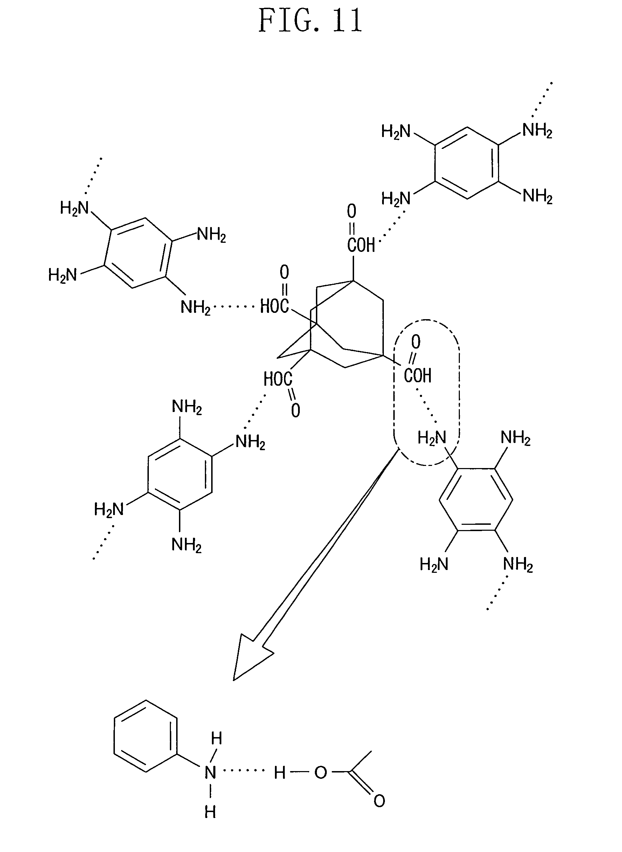

In the precursor solution obtained in the above-described manner, the first monomer as a three-dimensional cross-link molecule and the second monomer as a two-dimensional cross-link molecule are brought into a Lewis acid-base reaction. Specifically, tetracarboxyladamantane (the first monomer), i.e., a Lewis acid including a functional group assembly at each vertex of a tetrahedron (i.e., including four functional group assemblies) and tetraaminobenzene (the second monomer), i.e., a Lewis base including a functional group assembly at each end of a straight line (i.e., including two functional group assemblies) are brought into reaction. With this reaction, each of the four functional group assemblies of a first monomer is bound to one of two functional group assemblies of a second monomer by electrostatic interaction, so that the four functional groups of the first monomer are bound to different second monomers, respectively. Moreover, each of the two functional group assemblies of a second monomer is bound to one of four functional group assemblies of a first monomer by electrostatic interaction, so that the two functional group assemblies of the second monomer are bound to different first monomers, respectively. With such bindings, a Lewis acid and base adduct shown in FIG. **11**, i.e., an adduct having a diamond structure is formed.

Moreover, α-cyclodextrin molecules are contained in cavity portions of an adduct having a diamond structure.

1, 3, 5, 7-tetracarboxyladamantane includes a carboxyl group and tetraaminobenzene includes an amino group. That is, each of the first and second monomers includes a polar group. Furthermore, α-cyclodextrin includes a hydroxyl group, i.e., a polar group. Accordingly, in Example 1, the first and second monomers and the sacrificial organic molecule have high compatibility, so that α-cyclodextrin, i.e., a sacrificial organic molecule is not aggregated. As a result, the sacrificial organic molecule is contained in the adduct of this example without being aggregated and functions as a template for forming and maintaining a diamond structure. The adduct of this example is very stable because of this structure.

Moreover, in the precursor solution of Example 1, part of the adduct including the first and second monomers can be polymerized to form an oligomer. To form an oligomer, for example, the precursor solution for use in forming an organic polymer film may be placed in a nitrogen atmosphere to react for about six hours while being stirred at about 100 °C.

Thus, by forming an oligomer including cyclodextrin as the sacrificial organic molecule, a diamond structure can be formed in a more simple manner.

Next, the solution is applied to a silicon substrate by spin coating, and then the silicon substrate is heated at 160 °C for one minute using a hot plate or the like, thereby volatilizing cyclohexanone, i.e., a solvent. Thereinafter, the silicon substrate is placed in a nitrogen atmosphere or in vacuum and heated at 350 °C for 30 minutes using an electric furnace. By heating at 350 °C, polymerization of the first and second monomers proceeds. This reaction is shown in FIG. **10A**.

Thereinafter, the substrate is heated at an increased temperature to about 400 °C for another 30 minutes, so that cyclodextrin is decomposed by heat and volatilized. Thus, after cyclodextrin has been removed, cavities are formed in the organic film.

The polymer formed by polymerization is polyimidazole base polymer having a polyimidazole skeleton shown in FIG. **10A**. The relative dielectric constant of an obtained film was 2.3. When cyclodextrin as a sacrificial organic molecule was not added, the relative dielectric constant was 2.9. Therefore, it has been confirmed that cavity formation using a sacrificial organic molecule is effective.

In this example, volatilization and polymerization of cyclohexanone and decomposition of cyclodextrin are performed by heating. However, these treatments are not limited to heating but may be performed by, for example, plasma processing or the like.

### (Example 2)

Hereinafter, Example 2 as a specific example of an embodiment of the present invention will be described.

Example 2 is different from Example 1 in that a different substance is used as the second monomer which is a Lewis base.

In Example 2, as the first monomer which is a Lewis acid, 1, 3, 5, 7-tetracarboxyladamantane, i.e., a three-dimensional cross-link molecule including carboxyl groups as four functional group assemblies is used. This point is the same in Example 1, and 1, 3, 5, 7-tetracarboxyladamantane is a three-dimensional cross-link molecule expressed by the chemical formula of FIG. **3B.** However, as the second monomer which is a Lewis base, diaminodihydroxylbenzene, i.e., a benzene including an amino group and a hydroxyl group as two functional group assemblies is used. Example 2 is different from Example 1 in this point.

Diaminodihydroxylbenzene is a two-dimensional cross-link molecule expressed by the chemical formula shown in FIG. **4A** where one of **X**_{**1**} and **X**_{**2**} is a NH₂ group and the other is an OH group and one of **X**_{**3**} and **X**_{**4**} is a NH₂ group and the other is an OH group.

First, 1, 3, 5, 7-tetracarboxyladamantane of 0.019 mol (6 g), diaminodihydroxylbenzene of 0.038 mol (5.3 g) and α-cyclodextrin of 0.002 mol (2 g) are dissolved in 100 ml of cyclohexanone, thereby preparing a precursor solution. In this case, for example, if the solution is prepared as being heated at 60 °C, compatibility of 1, 3, 5, 7-tetracarboxyladamantane, diaminodihydroxylbenzene and α-cyclodextrin can be increased, so that a precursor can be prepared in a short time.

Thus, the precursor solution for use in forming an organic polymer film according to Example 2 can be obtained.

In the precursor solution, the first monomer, i.e., a three-dimensional cross-link molecule and the second monomer, i.e., a two-dimensional cross-link molecule are brought into a Lewis acid-base reaction. Specifically, tetracarboxyladamantane (the first monomer), i.e., a Lewis acid including a functional group assembly at each vertex of tetrahedron and diaminodihydroxylbenzene (the second monomer), i.e., a Lewis base including a functional group assembly at each end of a straight line react with each other. As a result, as in Example 1, these substances are bound to one another by electrostatic interaction, so that an adduct (Lewis acid-base adduct) having a diamond structure is formed.

Moreover, α-cyclodextrin molecules are contained in cavity portions of the adduct having a diamond structure.

1, 3, 5, 7-tetracarboxyladamantane includes a carboxyl group and diaminodihydroxylbenzene includes an amino group and a hydroxyl group. That is, each of the first and second monomers includes a polar group. Furthermore, α-cyclodextrin includes a hydroxyl group, i.e., a polar group. Thus, in Example 2, as in Example 1, the first and second monomers and the sacrificial organic molecule have high compatibility and α-cyclodextrin as the sacrificial organic molecule is not aggregated. As a result, the sacrificial organic molecule is contained in the adduct of this example without being aggregated and functions as a template for forming and maintaining a diamond structure. With this structure, the adduct of this example is very stable.

Moreover, in Example 2, as in Example 1, an oligomer may be formed in a precursor solution.

A method for forming an organic polymer film using the precursor solution for use in forming organic polymer film according to Example 2 is the same as that of Example 1. However, Example 2 is different from Example 1 in that a polymer formed by polymerization of the first and second monomers is a polyoxazole base polymer of FIG. **10B** having a polyoxazole skeleton. A polymerization reaction takes place as in the manner shown in FIG. **10B**.

Polyoxazole is advantageous because with polyoxazole, a film with a low polarizability, a low hygroscopic property and a low relative dielectric constant can be obtained, compared to polyimidazole. The relative dielectric constant of an obtained film was 2.2 and in Example 2, the dielectric constant was lower than that in Example 1 in which the relative dielectric constant of an obtained film was 2.3.

When cyclodextrin as a sacrificial organic molecule was not added, the relative dielectric constant was 2.9. Therefore, it has been confirmed that cavity formation using a sacrificial organ molecule is effective.

### (Example 3)

Hereinafter, Example 3 as a specific example of an embodiment of the present invention will be described.

Example 3 is different from Example 1 in that different substances are used as the first monomer which is a Lewis acid and the second monomer which is a Lewis base. Moreover, in Example 3, the first monomer which is a Lewis acid is a two-dimensional cross-link molecule and the second monomer, i.e., the Lewis base is a three-dimensional cross-link molecule. This point is largely different from Example 1 and Example 2.

Specifically, as the first monomer which is a Lewis acid, tetracarboxylbenzene anhydride, i.e., an aromatic hydrocarbon derivative including carboxyl groups as two functional group assemblies is used. Tetracarboxylbenzene anhydride is a two-dimensional cross-link molecule expressed by the chemical formula of FIG. **6A** where each of **X**_{**5**}**, X**_{**6**}, **X**_{**7**} and **X**_{**8**} is a carboxyl group.

Moreover, as the second monomer which is a Lewis base, 1, 3, 5, 7-tetraaminoadamantane, i.e., adamantan including amino groups as four functional group assemblies is used. This substance is a three-dimensional cross-link molecule expressed by the chemical formula of FIG. **8B.**

First, 1, 3, 5, 7-tetraaminoadamantane of 0.019 mol (6 g), tetracarboxylbenzene anhydride of 0.038 mol (5.3 g) and α-cyclodextrin of 0.002 mol (2 g) are dissolved in 100 ml of cyclohexanone, thereby preparing a precursor solution. In this case, for example, if the solution is prepared as being heated at about 60 °C, compatibility of 1, 3, 5, 7-tetracarboxyladamantane, tetracarboxylbenzene anhydride and α-cyclohexanone can be increased, so that a solution can be prepared in a short time.

Thus, a precursor solution for use in forming an organic polymer film according to Example 3 can be obtained.

In the precursor solution, the second monomer, i.e., a three-dimensional cross-link molecule and the first monomer, i.e., a two-dimensional cross-link molecule are brought into a Lewis acid-base reaction. Specifically, in the precursor solution, tetraaminoadamantane (the second monomer), i.e., a Lewis base including a functional group assembly at each vertex of a tetrahedron (i.e., including four functional group assemblies) and tetracarboxylbenzene anhydride (the first monomer), i.e., a Lewis acid including a functional group assembly at each end of a straight line (i.e., including two functional group assemblies) react with each other. With this reaction, each of the four functional group assemblies of a second monomer is bound to one of two functional group assemblies of a first monomer by electrostatic interaction, so that the four functional group assemblies of the second monomer are bound to different first monomers, respectively. Moreover, each of the two functional group assemblies of a first monomer is bound to one of four functional group assemblies of a second monomer by electrostatic interaction, so that the two functional group assemblies of the first monomer are bound to different second monomers, respectively. With such bindings, an adduct having a diamond structure is formed.

Moreover, α-cyclodextrin molecules are contained in cavity portions of an adduct having a diamond structure.

1, 3, 5, 7-tetraaminoadamantane includes an amino group and tetracarboxylbenzene anhydride includes a carboxyl group. That is, each of the first and second monomers includes a polar group. Furthermore, α-cyclodextrin includes a hydroxyl group, i.e., a polar group. Thus, in Example 3, the first and second monomers and the sacrificial organic molecule have high compatibility, so that α-cyclodextrin, i.e., a sacrificial organic molecule is not aggregated. As a result, the sacrificial organic molecule is contained in the adduct of this example without being aggregated and functions as a template for forming and maintaining a diamond structure. With this structure, the adduct of this example is very stable.

1, 3, 5, 7-tetracarboxyladamantane includes an amino group and tetracarboxylbenzene anhydride includes a carboxyl group. That is, each of the first and second monomers includes a polar group. Furthermore, α-cyclodextrin includes a hydroxyl group, i.e., a polar group. Thus, in Example 3, the first and second monomers and the sacrificial organic molecule have high compatibility, so that α-cyclodextrin is not aggregated. As a result, the sacrificial organic molecule is contained in the adduct of this example without being aggregated and functions as a template for forming and maintaining a sacrificial organic molecule. With this structure, the adduct of this example is very stable.

Moreover, in Example 3, as in Example 1, an oligomer may be formed in a precursor solution.

A method for forming an organic polymer film using the precursor solution for use in forming organic polymer film according to Example 3 is the same as that of Example 1. However, Example 3 is different from Example 1 in that a polymer formed by polymerization of the first and second monomers is a polyimide base polymer of FIG. **10C** having a polyimide skeleton. A polymerization reaction takes place as in the manner shown in FIG. **10C.**

It is easier to polymerize polyimide than polyimidazole or polyoxazole. Therefore, an oligomer including a sacrificial organic molecule can be quantitatively formed in a short time.

The relative dielectric constant of an obtained film was 2.3. When cyclodextrin, i.e., a sacrificial organic molecule was not added, the relative dielectric constant was 4.2. Therefore, it has been confirmed that cavity formation using a sacrificial organic molecule is effective.

In each of Example 1, Example 2 and Example 3, α-cyclodextrin is used as a sacrificial organic molecule including a polar group. However, instead of α-cyclodextrin, a cyclodextrin derivative including a polar group such as β-cyclodextrin, γ-cyclodextrin and the like can be used. Moreover, instead of a cyclodextrin derivative, a dendrimer derivative including a polar group may be used.

Moreover, in Example 1, Example 2 and Example 3, each of the concentrations, reaction temperatures, reaction times and the like for the precursor solution has been set to be a preferable value, but is not specifically limited. The concentrations, reaction temperatures, reaction times and the like may be appropriately selected according to properties of monomers to be used and an organic polymer film desired to be formed and the like.

## Claims

1. A precursor solution for use in forming an organic polymer film, comprising:
a first monomer which is a Lewis acid;
a second monomer which is a Lewis base to be brought into a Lewis acid-base reaction with the first monomer; and
a sacrificial organic molecule including a polar group.

2. The precursor solution of claim 1, wherein one of the first monomer and the second monomer is a three-dimensional cross-link molecule and the other is a two-dimensional cross-link molecule.

3. The precursor solution of claim 1, wherein the first monomer and the second monomer together form an adduct including the sacrificial organic molecule through a Lewis acid-base interaction.

4. The precursor solution of claim 3, wherein the adduct has a diamond structure and includes the sacrificial organic molecule in a cavity in the diamond structure.

5. The precursor solution of claim 1, wherein the first monomer is one of a carboxylic acid derivative, an alcohol derivative, a ketone derivative, an aldehyde derivative or an acid anhydride derivative, and
wherein the second monomer is an amine derivative.

6. The precursor solution of claim 1, wherein the first monomer is an admantane derivative including at least a carboxyl group, and
wherein the second monomer is an aromatic hydrocarbon derivative including at least an amino group.

7. The precursor solution of claim 1, wherein the first monomer is an admantane derivative including at least a carboxyl group, and
wherein the second monomer is an aromatic hydrocarbon derivative including at least an amino group and at least a hydrocarbon base.

8. The precursor solution of claim 1, wherein the first monomer is an aromatic hydrocarbon derivative including at least a carboxyl group, and
wherein the second monomer is an admantane derivative including at least an amino group.

9. The precursor solution of claim 1, wherein the sacrificial organic molecule is a cyclodextrin derivative or a dendrimer derivative.

10. The precursor solution of claim 1, further comprising: an oligomer of the first monomer and the second monomer including the sacrificial organic molecule.

11. A method for forming an organic polymer film, the method comprising the steps of:
applying the precursor solution of claim 1 over a substrate;
copolymerizing the first monomer and the second monomer in the precursor solution applied over the substrate to obtain a copolymer; and
removing the sacrificial organic molecule from the copolymer to form an organic polymer film.

12. The method of claim 11, wherein in the step of obtaining the copolymer and the step of forming the organic polymer film, heat treatment is performed.

13. A method for forming an organic polymer film, the method comprising the steps of:
performing heat treatment to the precursor solution of claim 1 so as to form an oligomer of the first monomer and the second monomer including the sacrificial organic molecule from part of the whole amount of the first monomer and part of the whole amount of the second monomer;
applying the precursor solution including the oligomer over a substrate;
copolymerizing the first monomer, the second monomer and the oligomer in the precursor solution including the oligomer and applied to the substrate so as to obtain a copolymer; and
removing the sacrificial organic molecule from the copolymer so as to form an organic polymer film.

14. The method of claim 13, wherein in the step of obtaining the copolymer and the step of forming the organic polymer film, heat treatment is performed.
